**Europäisches Patentamt**

**European Patent Office**

**Office européen des brevets**

(11) Publication number: **0 216 235**
**B1**

## EUROPEAN PATENT SPECIFICATION

(45) Date of publication of patent specification: **28.11.90**

(21) Application number: **86112394.1**

(22) Date of filing: **08.09.86**

(51) Int. Cl.⁵: **B 65 B 23/20, B 65 B 11/18, B 65 B 35/50, B 65 G 37/00, B 07 C 5/38**

(54) A machine for sorting, stacking and packaging type-classified ceramic tiles.

(30) Priority: **27.09.85 IT 4010485**

(43) Date of publication of application:
**01.04.87 Bulletin 87/14**

(45) Publication of the grant of the patent:
**28.11.90 Bulletin 90/48**

(84) Designated Contracting States:
**AT BE CH DE FR GB IT LI NL**

(56) References cited:
**EP-A-0 077 304**
**CH-A- 458 187**
**GB-A-1 182 022**
**US-A-2 783 600**
**US-A-3 643 816**

(73) Proprietor: **GOMES S.p.A.**
**Via Ferrari Carazzoli 12**
**I-41042 Fiorano Modenese (Modena) (IT)**

(72) Inventor: **Gozzi, Franco**
**Via Don Luigi Sturzo, 33**
**I-41043 Formigine Modena (IT)**
Inventor: **Mescoli, Giuliano**
**Via Toscanini, 14**
**I-41043 Formigine Modena (IT)**

(74) Representative: **Gardi, Giuliano**
**GARDIPATENT Palazzo Prora Via Giardini, 605**
**I-41100 Modena (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention disclosed is a machine for sorting, stacking and packaging previously classified ceramic tiles, that is, a new machine by means of which tiles are arranged into stacks and wrapped following the selection and sorting procedure.

The prior art in this field embraces machine units designed to sort ceramic tiles that will have been marked previously during the selection stage, to the end of forming them into stacks, say, of a given colour shading, and units designed to effect sorting operations and to package the tiles in readiness for warehousing and subsequent despatch. In machinery of the type, the stacks of tiles are obliged to cover distance unproductively on one or more occasions between the exit of the sorting unit and the entry point of the packaging unit, since the two units are separately embodied.

The prior art thus stands in need of improvement if the unproductive transfer of stacked tiles is to be avoided altogether between the various machine units which carry out the sorting, stacking and packaging operations. A new and advantageous multi-channel machine unit for packaging stacked tiles was disclosed in the Italian Patent No. 1 158 247 (application no. 40097 A/82), filed by the same applicant on October 14, 1982, granted on February 18, 1987; in such a unit, the tiles entered flat with the carton fed in vertically, rather than sideways-on with the carton fed in horizontally, as occurs in conventional units.

The Italian Patent No. 1 180 898 (application No. 40064 A/84), filed by the same applicant on July 10, 1984, granted on September 23, 1987, discloses a new machine for the combined selection, sorting and stacking of tiles in which an ascent conveyor at the entry stage was designed to shunt previously selected and classified tiles onto tiered conveyor belts, the tiles being transferred subsequently to a further, descent conveyor performing the function of stacker.

Transfer of the stacks of classified tiles from the exit of the stacking stage of the sorting unit to the entry point of the packaging unit was accomplished, in the applicant's machine, using a stretch of conveyor; in other manufacturer's machines, the stacker and the packaging unit are connected by way of a stretch of line, and grips are employed to effect transfer of the stacks.

The fact of having to transfer stacked tiles from the stacking unit to the packaging unit constitutes a drawback not only in terms of time, space and expenditure, but also, in terms of the unstable nature of the stacks; when handling smaller production sizes and high stacks, especially, tiles frequently drop and shatter, and in some instances, a particularly slim stack cannot be handled at all. From the foregoing, one may discern a need for a machine that will permit of sorting, stacking and packaging selected ceramic tiles using a single machine unit, wherein tiles of any given size may be arranged in stacks of any given height, and wherein no break in continuity occurs between the essential steps involved in the working operation, hence between the sorting, stacking and packaging stages of the machine.

The machine as disclosed responds to such a requirement, inasmuch as a new procedure is adopted comprising five packaging steps effected immediately after tiles are sorted and stacked according to classification; the stacks of tiles proceed uninterrupted through the various packaging steps, and down time and wasted space are thus eliminated. The sorting stage of the machine comprises substantially the same components as are disclosed in the Italian Patent No. 1 180 898 aforementioned, whilst the stacker stage features a new type of descent conveyor provided with pairs of hinged bearers.

Compared to the packaging unit as set forth in the Italian Patent No. 1 158 247 aforementioned, the first part of the packaging section according to the invention, which departs from the point where the stacked tiles exit from the stacker, features a new and improved embodiment of the former disclosure that is such as to provide a single, simplified packaging line.

As regards the type of packaging, tiles are wrapped automatically by the machine (indeed all the operations performed by the machine are carried out automatically) utilizing either a process wherein sheets wound off a supply roll are folded to shape, as in the Italian Utility Model No. 205 120 (application No. 29031 B/82), filed by the same applicant on July 30, 1982, granted on February 26, 1987, or employing single pre-creased cartons, as in the Italian Utility Model No. 205 119 (application No. 29032 B/82), likewise filed by the same applicant on July 30, 1982, granted on February 26, 1987.

The machine according to the invention, comprises:

an incoming line from which single tiles are fed into the machine, provided with apparatus for the detection of identifying marks made on the tiles during selection;

tiered conveyor belts provided with pressure rollers and set apart at a given vertical distance one from the next, which accommodate the flow of tiles and are served by an ascent conveyor having chain loops fitted with matched pairs of bearers by which single tiles are either indexed or conveyed continuously upward, and a set of actuators mounted to an upright;

a pair of frames fitted to the bottom and top ends, respectively, of the upright members of the ascent conveyor and incorporating means for adaptation to the width of tile handled;

a descent conveyor in receipt of the tiles from the tiered conveyor belts, embodied identical in certain respects to the ascent conveyor, having chain loops with matched pairs of bearers set apart one from the next at a vertical distance greater than the height of the stack of tiles formed on each such pair of bearers;

a top descent conveyor frame of the descent conveyor identical to the top frame of the ascent conveyor;

pressure rollers located at the runout of the tiered conveyor belts;

a pair of vertical stop rails, mounted to respective vertical hinge posts fitted to the upright members of the descent conveyor, and urged against the accumulating stack of tiles;

a packaging stage, supplied with cardboard sheets and equipped with an adhesive applicator, which incorporates a final section provided with two pairs of longitudinal members carrying relative sets of side-mounted plungers that serve to compact the finished packages.

The machine is characterized in that the single assembly of each pair of bearers serving the stacker stage of the machine is pivotably embodied with a respective longitudinal hinge pin that passes through a single rung affording attachment to the chain loop, of the descent conveyor and comprises a bracket supporting one side of the tile on descent, and a pair of lugs extending from the hinge pin at right angles to the brackets, each of which has a stop at one end designed to make contact with a further rung parallel with the hinge rung, to the end of holding the bracket in a horizontal position when descending on the innermost branch of the chain loop during stacking operations.

Advantages of the invention are: elimination of down time caused by passage from the stacker exit to the entry of the packaging stage, as the stack is formed at the entry point of the packaging stage itself; elimination of the need for means of moving stacks bodily from the stacker to the packaging stage; reduction in dimensions of the unit; lower outlay and running costs; stability of stacked tiles, whatever the size, even in a stack of limited base area and considreable height; simple design; higher output. An embodiment of the machine will now be described in detail, by way of example, with the aid of the accompanying drawings, in which:

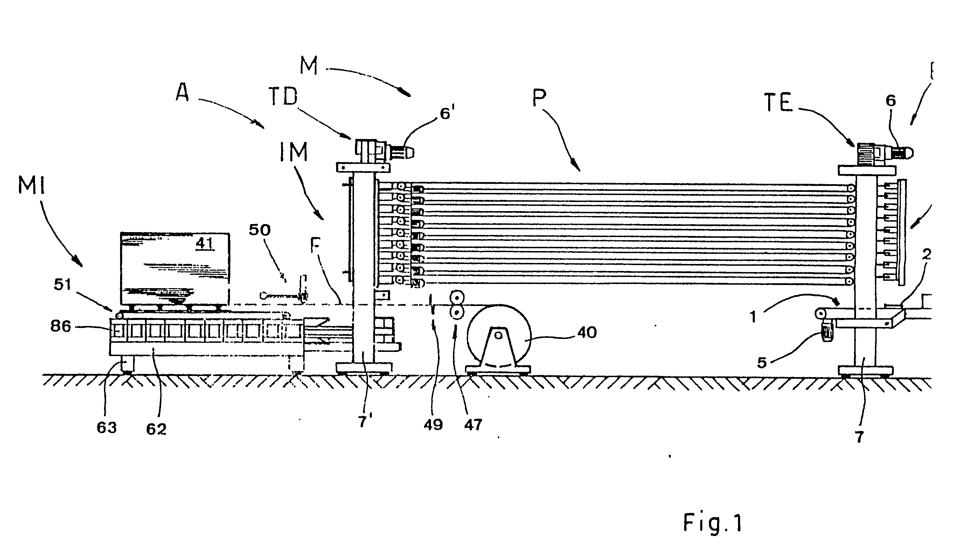

Fig. 1 is the side elevation of a machine according to the invention,

Fig. 2 is a side elevation of the entry point E of the multi-tier sorting stage MS and its ascent conveyor TE, seen in enlarged scale and partially cut away;

Fig. 3 is a side elevation of the point A where the multi-tier stage MS connects with a further stage MI where tiles are packaged in stacks, showing the descent conveyor TD which functions as a stacker IM, seen in enlarged scale and partially cut away;

Fig. 4 is a plan of the final part of the first stage of the machine showing the point A where the stacker connects with the second stage, viewed at mid-height and partially cut away;

Fig. 5 shows the parts omitted from Fig. 4, as viewed from the same standpoint;

Figs. 6 and 7 show the plan of a pre-creased carton and the perspective of a packaged stack of tiles as obtained therewith, respectively;

Figs. 8 and 9 show the plan of a plain sheet of cardboard, and the perspective of a packaged stack of tiles as obtained therewith, respectively;

Fig. 10 illustrates the first step in packaging;

Fig. 11 illustrates the second packaging step, whereby a fold is produced at the bottom front and rear;

Fig. 12 illustrates the third packaging step, whereby folds are made at the top rear and rear side flaps;

Fig. 13 illustrates the fourth packaging stage, in which the front side flaps are folded and the top front flap is fastened over the top rear flap;

Fig. 14 illustrates the partial overlap of the top and bottom side flaps;

Fig. 15 is a vertical cross section through the bottom end of the point of connection A, showing parts relative to the packaging stage;

Fig. 16 is the section XVI—XVI in Fig. 15;

Fig. 17 is the section XVII—XVII in Fig. 3, seen in enlarged scale and showing the point of connection A only, to the end of illustrating the stack feed and size-change adjustment devices;

Fig. 18 is the view of Fig. 3 from overhead, likewise showing the point of connection A only;

Fig. 19 is the vertical cross section XIX—XIX in Fig. 4;

Fig. 20 is an elevation of Fig. 4 as viewed from the right, partially cut away, showing the stack feed device only;

Fig. 21 is the vertical cross section XXI—XXI in Fig. 5.

In the drawings, 1 denotes an incoming line carrying tiles 2 toward the machine, which is equipped with apparatus 3 designed to detect classifying marks made on the tiles during selection.

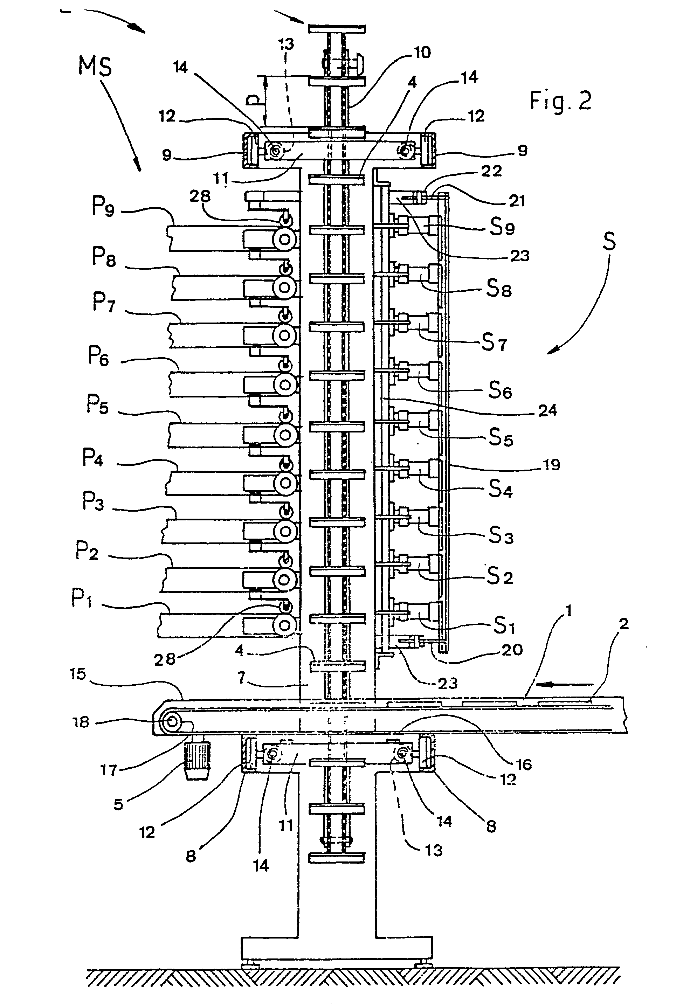

In Fig. 2, P1, P2...P9 denote the parallel tiered surfaces on which tiles 2 accumulate, consisting of conveyor belt loops disposed parallel and horizontal (or at an angle) one above the next. S1...S9 denote a set of actuators serving to shunt single tiles 2 from pairs of bearers 4, set apart one from the next on an ascent conveyor TE at the same distance P as that separating the single tiers P, onto the single belt loops constituting the tiers.

5 and 6 denote geared motors driving the incoming line 1 and the ascent conveyor TE, respectively, and 7 denotes the main frame of the entry section, from the top of which the conveyor TE is suspended.

8 and 9 (Figure 2) denote horizontally and symmetrically disposed frames forming part of the main frame 7, the bottom frame 8 situated immediately beneath the incomiung line 1, and the top frame 9 immediately above the uppermost tier P, to which the two chain loops of the ascent conveyor TE with their respective sets of bearers 4 are fitted in such a way as to permit of transverse adjustment.

10 denotes an internal upright member affording support to each of the ascent conveyor chains, and 11 denotes a relative longitudinal member to which the upright 10 is fastened at top, and bottom; the members 11 thus provide pairs of adjustable horizontal rails each of the single ends of which is associated with a wheel 12 rolling on a relative cross-member of the respective frame 8 and 9.

Each rail 11 is provided with transversely disposed lead nuts 13 that pair with respective lead screws; 14 denotes the single lead screw, which is embodied in two threaded sections of opposite hand and journalled at either end to the longitudinal members of the relative frame 8 and 9 such that the rails 11 at either side of the ascent conveyor, hence the chain loops and their relative sets of bearers 4, can be drawn together or spread apart transversely at one and the same moment, thereby adapting the conveyor to the width of the single tile 2.

15 denotes a pair of longitudinal members provided with external lugs 16 which are made fast to the bottom pair of adjustment rails 11; 17 denotes a pair of pulleys mounted rotatably to the front ends of the longitudinal members 15 and serving to turn the belts of the incoming line 1; more exactly, the pulleys 17 are fitted slidably to a splined shaft 18 driven by the geared motor 5, and thus are capable of axial movement.

19 denotes an upright to which the actuator cylinder S are hinged, 20 and 21 denote respective lower and upper studs which are fastened by way of nuts 22 (therefore adjustable) to a pair of contoured cross-members 23 issuing from the main frame 7 and interconnected at either end by upright hollow members 24 each of which is hinged to the top and bottom frames 9 and 8.

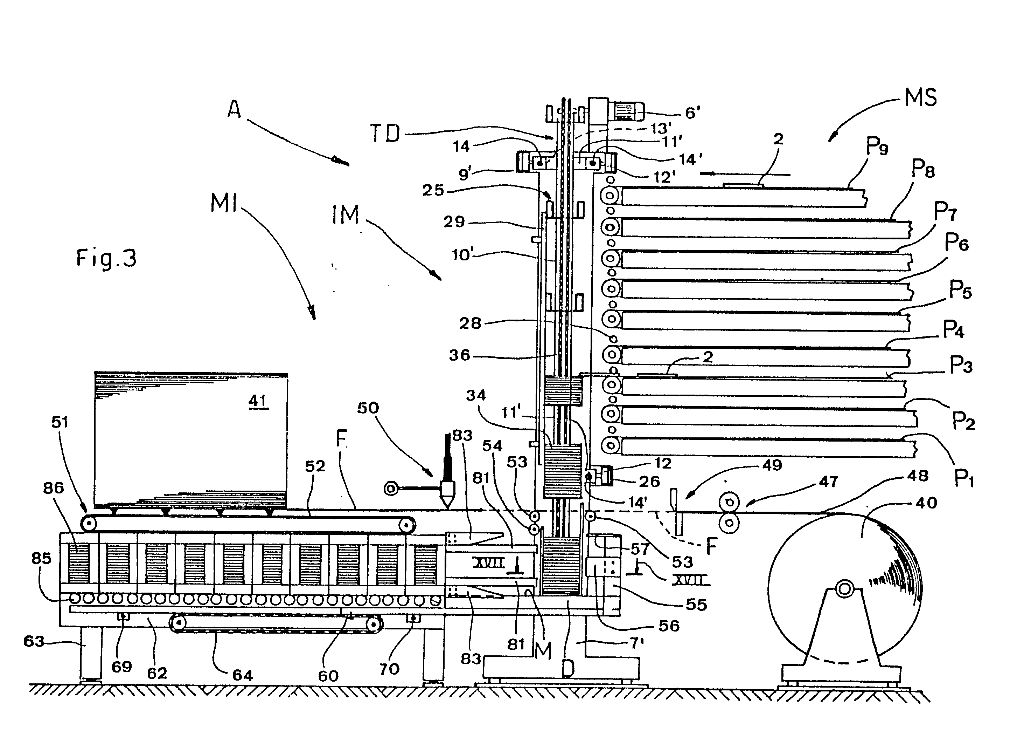

In Fig. 3, TD denotes a descent conveyor driven by a variable-speed geared motor 6' and suspended from the top of the main frame 7' at the outgoing section of the machine 9' denotes a horizontal frame forming part of the main frame 7', situated immediately above the uppermost tier P, to which one end of the descent chain loops is mounted so as to permit adjustment through a transverse path; the chain loops of the descent conveyor carry matched sets of hinged bearers 25, and are provided with relative internal upright support members 10'.

26 denotss a half-frame disposed parallel to the top horizontal frame 9', forming part of the main frame 7' and positioned immediately below the runout from the bottom tier P1 at the exit of the stage in which tiles 2 are allowed to accumulate, with which a pair of horizontal and longitudinal members 11' associates in such a way as to remain slidable through a horizontal path; each horizontal member 11' is associated fixedly with a relative upright member 10'.

12' denotes the wheel at each end of the rails 11' in the top frame 9', and at the one end of the rils 11' in the half-frame 26 at bottom.

Each rail 11' is provided with at least one transversely disposed lead nut 13', paired with a relative lead screw, there are three such screws 14', embodied in two threaded sections of opposite hand, two of which journalled at either end to the longitudinal members of the top frame 9', and the third to the longitudinal members of the half-frame 26, such that the rails 11' at either side of the descent conveyor, hence the chain loops and their relative sets of hinged bearers 25, can be drawn together or spread apart transversely at one and the same moment thereby adapting the conveyor TD to the width of single tile 2.

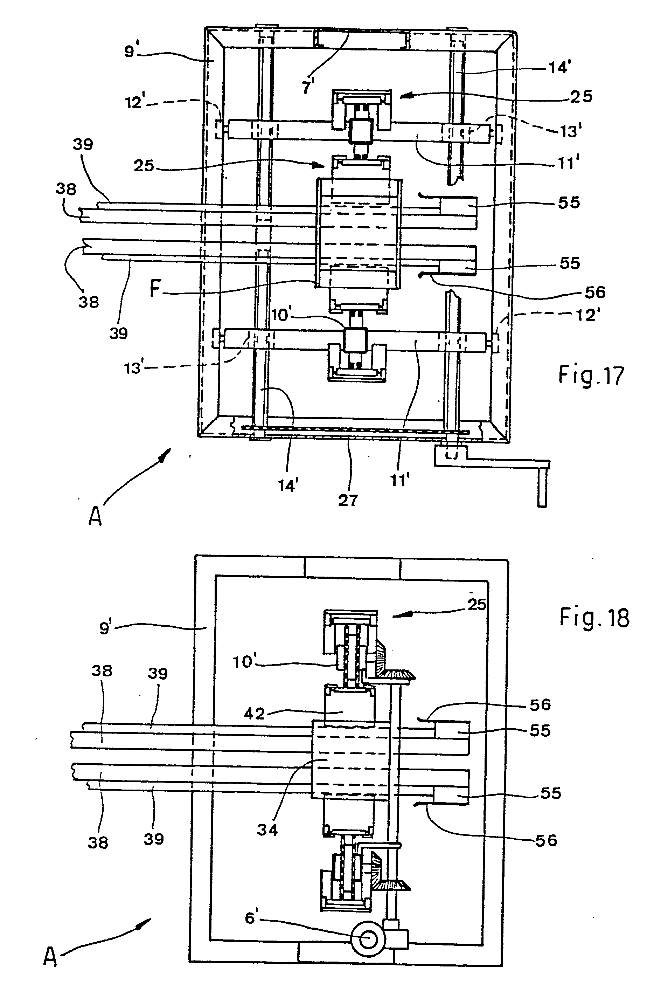

Fig. 17 illustrates one of two transmission chains 27 serving to synchronize movement of the two sets of lead screws 14 and 14' when cranked by a handle.

28 and 28' denote respective pressure rollers at the entry and exit ends of a single tiered conveyors.

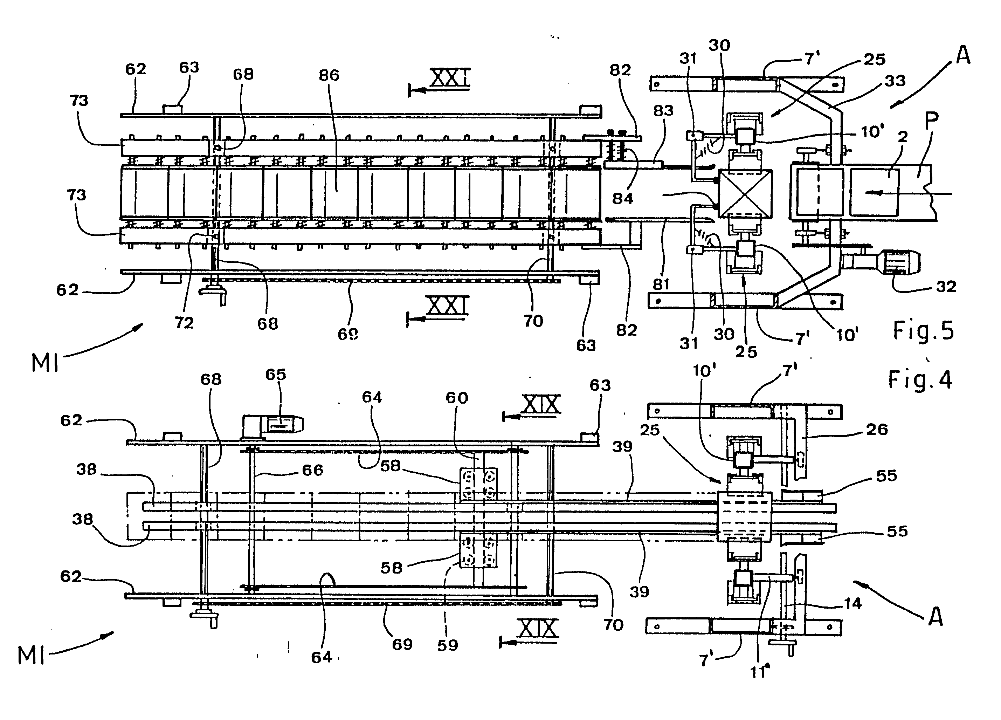

29 denotes a pair of vertical stop rails urged by springs 30 (see Fig. 5) into a position against the leading edge of the tile 2 being stacked. 31 denotes a pair of vertical hinge posts fitted to the upright members 10' of the descent conveyor, to which the stop rails 29 are pivotably mounted.

32 denotes the geared motor driving each tiered conveyor P1...P9, mounted to a frame 33 that supports the runout of each conveyor and is attached to the main frame 7' in its turn.

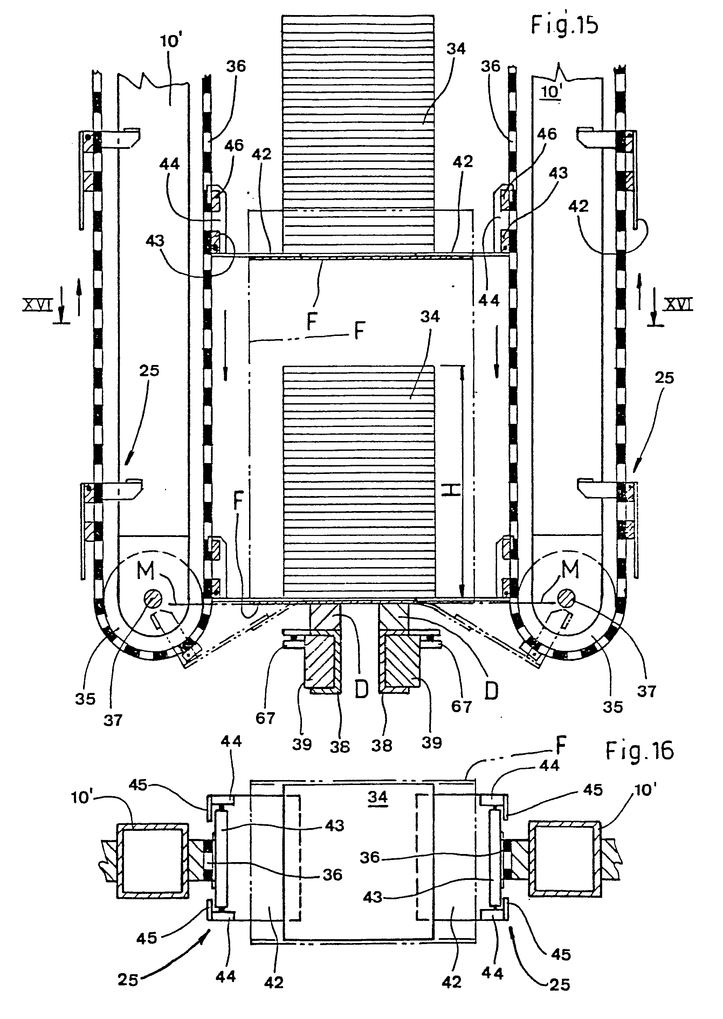

In Figs. 15 and 16, the stack of tiles formed at the stacker stage IM of the machine is denoted 34.

35 denotes the bottom, idle pulleys of the two descent chain loops 36 which are mounted to shafts 37 journalled to the bottom ends of the upright members 10' and rotating about axes that are contained within the horizontal plane M coincident with a surface along which the stacks of tiles 34 are shunted during packaging, the surface in question is offered by the top of two distance pieces D fastened to a pair of guides 38 which control the movement of a pair of longitudinal feed rails 39 constituting part of the packaging stage of the machine, denoted MI.

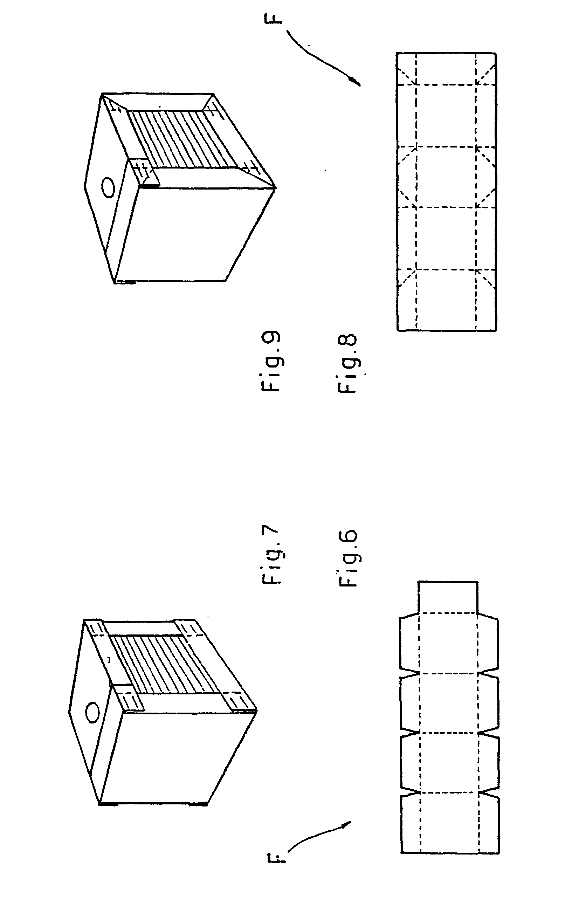

In Fig. 8, F denotes a length of cardboard sheet uncoiled from a supply roll 40, seen prior to being folded around the tiles in the subsequent packaging steps; F in Fig. 6 denotes a pre-creased carton that would be supplied from a magazine 41.

42 denotes the bracket, forming part of each hinged bearer 25, which supports one side of the tile 2 on descent; the single bracket 42 is suspended from a relative rung 43 carrying the hinge pin between a pair of lugs 44, each of which has a stop 45 at one end designed to make contact with a further rung 46 parallel to the hinge rung 43, to the end of holding the bracket 42 in a horizontal position.

The hinged bearers 25 are set apart one from the next at a distance that exceeds the height H of the stack 34, say 1.5×H, and is equal to a multiple of the distance P separating the single tiers P.

47 denotes a pair of pinch rolls that draw the continuous sheet of cardboard 48 from the supply roll, 49 denotes the guillotine by which the continuous material is cut into discrete sheets F of appropriate length, and 50 denotes a device which applies adhesive to those areas of the sheet, as illustrated in Figs. 6 and 8, that are ultimately to overlap.

51 denotes a sucker device providing for transfer of single pre-creased sheets F from the magazine 41, and comprising a pair of conveyor chain loops 52 for the purpose.

53 denotes a pair of transverse idle rollers occupying a common horizontal plane, mounted to the main frame 7' in such a way as to permit of adjustment through a longitudinal path, which are designed to urge the front and rear panels of the sheet F into contact with the front and rear of the stack 34, and to perform additional packaging functions.

54 denotes a third roller, likewise mounted to the main frame 7', which is located beneath and in vertical alignment with the foremost of the first two rollers 53, and with its axis at a distance above the horizontal plane M aforementioned such as will admit passage of the stack 34 beneath the roller 54 itself. The third roller 54 is vertically adjustable and can shift longitudinally, but only as one with the roller 53 above.

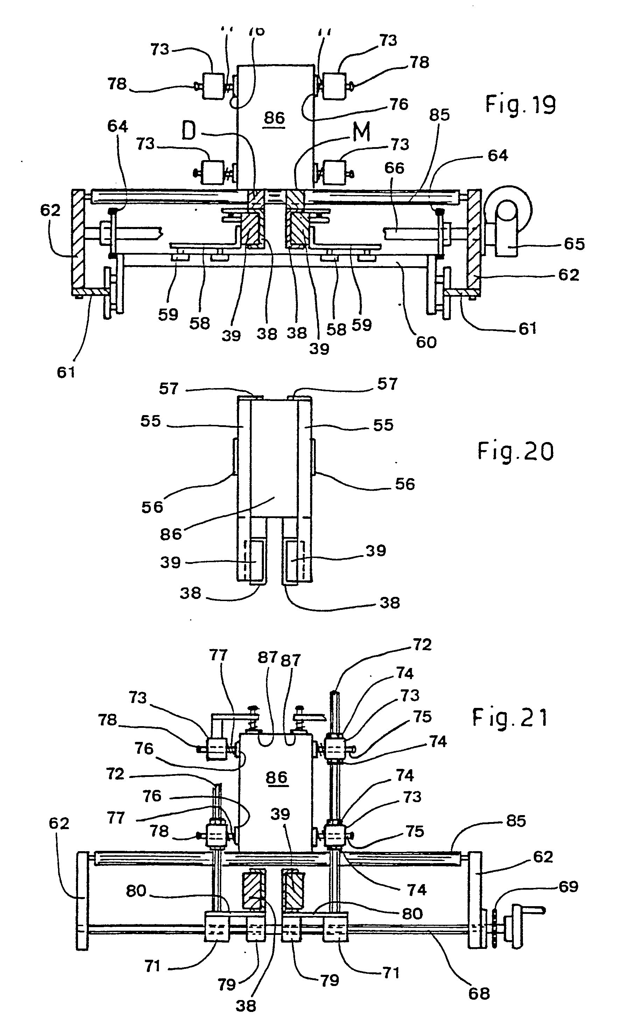

In Fig. 20, 55 denotes a pair of parallel upright members fixed to the rear end of the pair of longitudinal feed rails 39, each of which is provided at mid-height with a vertical side plate 56 that produces the rear side folds in the cardboard sheet F, and uppermost, with a horizontal plate 57 that folds down the top rear flap of the sheet. In Fig. 19, 58 denotes an angle bracket fixed to the outside of each feed rail 39, the horizontal part of which is provided with wheels 59 rolling in contact with the sides of a transverse member 60 that travels longitudinally along a pair of longitudinal members 61 fitted to the bottom of each side 62 of the framework 63 of the packaging stage MI.

The transverse member 60 is propelled by a pair of chain loops 64 driven from a geared motor 65 mounted to the side 62 of the framework, via a shaft 66.

Further wheels 67 restrain the feed rails 39 from lateral movement by engaging the top of the outward-facing surface of each rail. 68 denotes a transverse lead screw, bodied in two threaded sections of opposite hand (Figs. 4, 5 and 21) connected by way of chain loop 69 with a further, identical lead screw 70, both lead screws are journalled to the sides 62 of the framework and engage with two pairs of lead nuts 71 which associate in their turn with respective studs 72 extending above to interconncet two pairs of vertically adjustable longitudinal members 73, top and bottom, by way of relative nuts 74.

75 denotes a set of transversely disposed plungers at each side of the packaging unit, each plunger 75 having an inward facing pad 76 biased toward centre by a relative coil spring 77 so as to press against the sides of the packaged stack of tiles; the stems of the single plunger slide in transverse holes afforded by the longitudinal members 73, and incorporate a terminal boss 78 that functions as a stop.

79 denotes a further pair of lead nuts engaging each of the two lead screws 68 and 70, and occupying relative positions nearer to centre than those of the lead nuts 71 aforementioned; each of the single lead nuts denoted 71 is interconnected with the relative lead nut denoted 79 by way of a plate 80, thereby creating four integral pairs, each of the innermost lead nuts 79 being connected with a respective feed rail guide 38.

81 denotes a pair of flexible, longitudinal blades fitted to the entry end of each pair of longitudinal members 73 by way of a relative pair of brackets 82, the purpose of which is to produce the front side folds in the carton, and associated with respective pairs of profiled plates 83 which are fitted to the brackets 82 by way of sprung fasteners 84 and serve to fold down the top and bottom side flaps of the carton.

85 denotes a longitudinal rollerway, along which packaged stacks 86 continue while being fully compacted, and 87 denotes further sets of plungers (Fig. 21) identical to the side plungers 75, but vertically disposed, which press down on the top flaps of each carton at either side of centre.

Operation is as follows.

Previously selected tiles 2 fed into the machine off the incoming line 1 are conveyed beneath the detection apparatus 3, which has the type code memorized for each selected class of tile, and one by one, are picked up by pairs of bearers 4 on the upward-moving branches of the ascent conveyor chain loops TE of the distributor E.

The single tiles ascent, either indexed through distance P or moving continuously, and on arrival at the allocated tier P1... of the sorting stage, are shunted over onto the relative conveyor belt by the corresponding actuator S1..., once on the conveyor belt P, the tile 2 is indexed forward through a distance greater than its own longitudinal dimension.

When the requisite number of tiles 2 for formation of a stack 34 has accumulated on the one conveyor, say, sufficient to cover one square metre, incoming tiles 2 of the same type classification will begin ascending to the next vacant tier P above, if, with the requisite number of tiles 2 accumulated on the tier, the length of the conveyor occupied is less than the overall length available, then the conveyor will cease indexing and turn continuously in order to bring the leading tile to the forward limit of the belt in readiness for transfer to the hinged bearers 25 of the descent conveyor TD, a pair of which will be moving toward the tier P in question.

The full tier is thus ready to offload its contents, and the belt begins turning continuously such that the tiles are transferred to the pair of brackets 42 offered by the hinged bearers 25, which will descend gradually at a rate slower than the running speed of the belt, ultimate descent speed will depend on the thickness of the single tile and on the longitduinal distance between centres of the tiles occupying the tier.

The completed stack 34 continues downward at a higher speed, descending onto the cardboard sheet F and triggering the start of the packaging sequence, which involves the following steps:

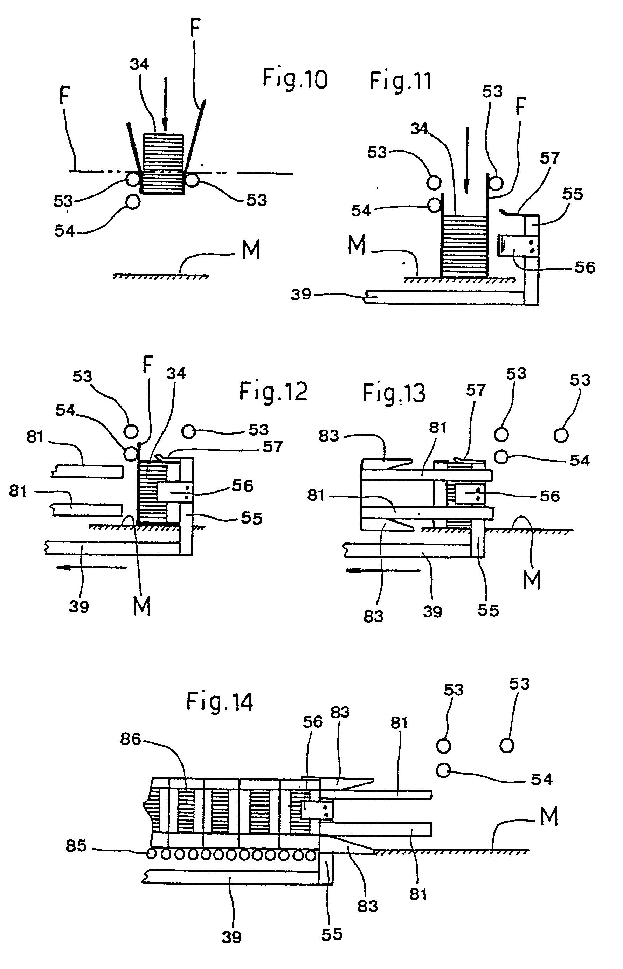

**Step 1 (Fig. 10)**

Descent of the stack 34 brings the brackets 42 of the pair of hinged bearers 25 into contact with the cardboard sheet F, urging it downward through the gap between the two rollers 53.

**Step 2 (Fig. 11)**

With the stack 34 continuing downward between the rollers 53, the cardboard sheet F is brought into contact with the two distance pieces D carried by the feed rail guides 38, the top surface of which either coincides exactly with the plane denoted M, or better still, lies marginally lower; descent of the stack ceases, while the brackets 42 follow the path dictated by the chain loops 36 and ride over the bottom side flaps of the cardboard sheet F before drawing away and swinging into the stowed position assumed during ascent on the outer branch of the chain loop; at this point, the cardboard envelops the bottom, front and rear faces of the stack 34.

**Step 3 (Fig. 12)**

The geared motor 65 starts up and the transverse member 60 moves forward, drawing with it the pair of feed rails 39 and their upright members 55 with the two pairs of plates 56 and 57, which fold down the rear side flaps and the top rear flap, respectively.

**Step 4 (Fig. 13)**

With continued movement of the transverse member 60, contact is made ultimately between the pair of upright members 55 and the rear section of the sheet of cardboard F, and the partly enveloped stack 34 is pushed forward; the third roller 54 now folds the projecting top front flap down over the stack, and the ends of the two pairs of flexible blades 81 are brought into contact with the leading surface of the sheet F that projects beyond the stack at either side, that is, the two front side flaps, which are duly folded toward the rear.

**Step 5 (Fig. 14)**

With the transverse member 60 still moving forward, the top and bottom side flaps encounter the two steps of profiled plates 83, and are folded downwards and upwards, respectively.

Brought thus to completion in step 5, the package is urged into contact with the package next in front, and moved on to the stretch where the plungers 75 and 87 compact the wrapping firmly into position.

Step 5 being accomplished, rotation of the geared motor 65 is inverted and the packaging stage resets.

**Claims**

1. A machine for sorting, stacking and packaging type-classified ceramic tiles, comprising: an incoming line (1) from which single tiles (2) are fed into the machine, provided with apparatus (3) for the detection of identifying marks made on the tiles during selection;

tiered conveyor belts (P1, P2, P3...) provided with pressure rollers (28) and set apart at a given vertical distance (p) one from the next, which accomodate the flow of tiles and are served by an ascent conveyor (TE) having chain loops fitted with matched pairs of bearers (4) by which single tiles (2) are either indexed or conveyed continuously upward, and a set of actuators (S) mounted to an upright (19);

a pair of frames (8, 9) fitted to the bottom and top ends, respectively, of the upright members (10) of the ascent conveyor and incorporating means for adaptation to the width of tile (2) handled;

a descent conveyor (TD) in receipt of the tiles (2) from the tiered conveyor belts (P1, P2, P3...), having chain loops with matched pairs of bearers set apart one from the next at a vertical distance greater than the height of the stack of tiles (34) formed on each such pair of bearers;

a top descent conveyor frame (9') of the descent conveyor (TD) identical to the top frame (9) of the ascent conveyor (TE);

pressure rollers (28') located at the runout of the tiered conveyor belts (P1, P2, P3...);

a pair of vertical stop rails (29), mounted to respective vertical hinge posts 31 fitted to the upright members (10') of the descent conveyor (TD), and urged against the accumulating stack of tiles;

a packaging stage, supplied with cardboard sheets (F) and equipped with an adhesive applicator, which incorporates a final section provided with two pairs of longitudinal members (73) carrying relative sets of side-mounted plungers (75) that serve to compact the finished packages, characterized in that the single assembly of each pair of bearers (25) serving the stacker stage (IM) of the machine is pivotably embodied with a respective longitudinal hinge pin that passes through a single rung (43) affording attachment to the chain loop, of the descent conveyor (TD) and comprises a bracket (42) supporting one side of the tile (2) on descent, and a pair of lugs (44) extending from the hinge pin at right angles to the brackets, each of which has a stop (45) at one end designed to make contact with a further rung (46), parallel with the hinge rung (43), to the end of holding the bracket (42) in a horizontal position when descending on the innermost branch of the chain loop during stacking operations.

2. Machine as in Claim 1, wherein the upright support members (10') of the descent conveyor (TD) connect at bottom with a half-frame (26) occupying the side nearest the tiered conveyor belts and situated immediately beneath the lowest of the tiers (P1), and wherein the half-frame carries one lead screw (14') embodied in two threaded sections of opposite hand, the purpose of which is to adapt the descent conveyor to the width of single tile (2) handled.

3. Machine as in Claim 1, the packaging stage (MI) of which comprises a pair of longitudinal feed rails (39) that associate slidably with a relative pair of guides (38), the tops of which carry respective distance pieces (D) constituting the packaging surface (M), and are actuated by a transverse member (60) driven from a geared motor (65), wherein the feed rails (39) are provided at rear with a pair of upright members (55), with a pair of vertical plates (56) attached one to the outer side of each upright member, and, with a pair of horizontal plates (57) attached one to the top of each upright member, and wherein the pairs of plates serve to fold the rear side flaps and the top rear flap, respectively, of the cardboard sheet (F).

4. Machine as in Claim 1, the main frame (7') of which carries a pair of transverse rollers (53) adjustable through a common horizontal plane and disposed marginally below the horizontal plane occupied by the cardboard sheet (F) uncoiled from a supply roll (40) or fed in from a magazine (41), wherein such rollers, which afford initial support to the sheet, are disposed such that the distance separating their innermost straight-line generators is such as to admit vertical passage of the stack (34) of tiles plus two thicknesses of cardboard; and wherein a further roller (54), located below and in vertical alignment with the foremost roller (53) of the pair and adjustable as one therewith, is distanced vertically from the packaging surface (M) beneath such as to admit longitudinal passage of the stack (34) plus at least two thicknesses of cardboard.

5. Machine as in Claims 1, 2, 3 and 4, wherein the ends of the longitudinal members (73) of the packaging stage (MI) first encountered by packaged stacks (86) of tiles approaching the compaction area carry two pairs of flexible, longitudinal blades (81), mounted by way of respective brackets (82), the purpose of which is to fold down the front side flaps of the cardboard sheet (F).

6. Machine as in Claims 1, 2, 3, 4 and 5, wherein the ends of the longitudinal members (73) of the packaging stage first encountered by packaged stacks (86) of tiles approaching the compaction area carry two pairs of profiled plates (83) which are fitted to the brackets (82) by way of transversely disposed sprung fasteners (84) and serve to fold down the top and bottom side flaps of the cardboard sheet (F).

**Patentansprüche**

1. Maschine zum Sortieren, Stapeln und Verpacken von typ-klassifizierten keramischen Platten bestehend aus:
einem Einlaufstrang (1), auf dem die einzelnen Platten (2) in die Maschine gelangen, mit einem Anzeigegeraet (3) fuer die beim Sortieren auf die Platten angefertigten Markierungen;
reihenweise angeordneten Foerderbaendern (P1, P2, P3...) mit Druckrollen (28) und vorbestimmtem vertikalem Abstand (p) zueinander zur Aufnahme des Plattenstroms, die von einem Steigefoerderer (TE) beschickt werden, dessen Kettenschleifen mit passenden Auflagepaaren (4) ausgeruestet sind, wodurch die einzelnen Platten (2) getaktet oder kontinuierlich gehoben werden, und einem Satz Betaetigungsglieder (S) an einem Staender (19) befestigt;
einem Rahmenpaar (8, 9) jeweils an die unteren und oberen Enden der Staenderelemente (10) des Steigefoerderers angebracht und mit integrierten Regelvorrichtungen fuer die bearbeitete Plattenbreite (2);
einem Senkfoerderer (TD) zur Aufnahme der Platten (2) aus den reihenweise angeordneten Foerderbaendern (P1, P2, P3...), wobei die Kettenschleifen mit den passenden Auflagepaaren in einem vertikalen Abstand zueinander liegen, der groesser ist als die Hoehe des auf jedem Auflagepaar geformten Plattenstapels (34);
einem oberen Senkfoerderrahmen (9') des Senkfoerderers (TD), der mit dem oberen Rahmen (9) des Steigefoerderers (TE) identisch ist;
Druckrollen (28') am Auslauf der reihenweise angeordneten Foerderbaender (P1, P2, P3...);
einem Paar vertikaler Anschlagschienen (29) an entsprechende vertikale Scharnierpfosten (31) angebracht, die mit den Staenderelementen (10) des Senkfoerderers (TD) befestigt sind, und die gegen den sich ansammelnden Plattenstapel druecken;
einer Verpackungsstation, die mit Pappbogen (F) beschickt ist und einen Klebeauftrager aufweist, deren Endabschnitt zwei Paar Laenselemente (73) mit entsprechenden Bestueckungen seitlich angebauter Kolben (75) beinhaltet, um die fertigen Packungen zu verdichten, dadurch gekennzeichnet, dass die einzelne Baueinheit jedes Auflagepaares (25) zur Stapelstation (IM) der Maschine mit dem entsprechenden Laengsscharnierstift, der durch eine Einzelspeiche (43) geht und somit die Verbindung zur Kettenschleife herstellt, des Senkfoerderers (TD) angelenkt ist und eine Konsole (42) aufweist, die eine Seite der herabfahrenden Platte (2) und ein Paar Oesen (44) abstetzt, das im rechten Winkel zu den Konsolen vom Scharnierstift hervorsteht und jeweils an einem Ende einen Anschlag (45) beinhaltet mit der Aufgabe, eine Verbindung zu einer weiteren und mit der Scharnierspeiche (45) parallelen Speiche (46) herzustellen und infolgedessen die Konsole (42) beim Senken auf den innersten Abschnitt der Kettenschleife waehrend der Stapelvorgaenge horizontal zu halten.

2. Maschine nach Patentanspruch 1, dadurch gekennzeichnet, dass die stuetztenden Staenderelemente (10') des Senkfoerderers (TD) sich bodenseitig an einen Halbrahmen (26) anschliessen, der die am naechsten zu den reihenweise angeordneten Foerderbaendern befindliche Seite einnimmt und unmittelbar unter der tiefsten Reihe (P1) liegt, wobei der Halbrahmen eine in zwei Gewindeabschnitte entgegengesetzten Sinnes aufgenommene Leitspindel (14') traegt, um hiermit den Senkfoerderer auf die Breite der bearbeiteten Einzelplatte (2) abzustimmen.

3. Maschine nach Patentanspruch 1, dadurch gekennzeichnet, dass die Verpackungsstation (MI) ein Paar laengsverlaufender Beschickungsschienen (39) aufweist, in Gleitverbindung mit einem entsprechenden Paar Fuehrungen (38), deren Oberenden jeweils Distanzstuecke (D) abstutzen und die Verpackungsflaeche (M) bilden, und das durch ein von einem Getriebemotor (65) angetriebenes Querelement (60) betaetigt wird, wobei die Beschickungsschienen (39) rueckseitig mit einem Paar Staenderelemente (55), mit einem Paar vertikaler Platten (56), jeweils eine an der Aussenseite jedes Staenderelementes befestigt, und mit einem Paar horizontaler Platten (57), jeweils eine an der Oberseite jedes Staenderelementes befestigt, verbunden sind, wobei die Plattenpaare jeweils die hinteren Seitenlaschen und die obere Hinterlasche des Pappbogens (F) falzen.

4. Maschine nach Patentanspruch 1, dadurch gekennzeichnet, dass der Hauptrahmen (7') ein Paar in einer gemeinsamen, horizontalen Ebene verstellbaren und randseitig unter der horizontalen Ebene des von einer Walze (40) abgespulten oder von einem Magazin (41) eingeschobenen Pappbogens angeordneten Querrollen (53) abstuetzt, wobei diese Rollen, die dem Bogen eine Anfangsblage sichern, derart ausgerichtet sind, dass der Abstand zwischen den inneren Erzeugungsgeraden den vertikalen Durchlauf der Plattenstapel (34) plus zwei papplagen ermoeglicht; und wobei eine weitere Rolle (54), unterhalb der und in vertikaler Ausfluchtung zu der genannten Rolle (53) des Paares sowie hiermit als Ganzes verstellbar, in vertikalem Sinne unterhalb der Verpackungsflaeche (M) dermassen davon entfernt ist, den laengsseitigen Durchlauf der Plattenstapel (34) plus mindestens zwei Papplagen zu ermoeglichen.

5. Maschine nach Patentanspruechen 1, 2, 3 und 4, dadurch gekennzeichnet, dass die Enden der Laengselemente (73) der Verpackungsstation (MI), die als erste von den abgepackten Plattenstapeln (86) in Annaeherung zur Verdichtungsflaeche angelaufen werden, zwei Paar dehnbarer Laengsblaetter (81) lagern, die durch entsprechende Buegel (82) angebaut sind, mit der Aufgabe, die vorderen Seitenlaschen des Pappbogens (F) zu falzen.

6. Maschine nach Patentanspruechen 1, 2, 3 und 4, dadurch gekennzeichnet, dass die Enden der Laengselemente (73) der Verpackungsstation (MI), die als erste von den abgepackten Plattenstapeln (86) in Annaeherung zur Verdichtungsflaeche angelaufen werden, zwei Paar Profilplatten (83) lagern, die durch quer verlaufende Federklemmen (84) an den Buegeln (82) befestigt sind und zum Falzen der oberen und unteren Seitenlaschen des Pappbogens (F) dienen.

**Revendications**

1. Machine pour trier, empiler et empaqueter des tuiles classifiées selon le type, comprenant:

une ligne d'entrée (1), de laquelle les tuiles (2) sont alimentés à la machine, munie d'un dispositif (3) pour la détection des marques d'identification faites sur les tuiles pendant le triage;

des convoyeurs à courroie (P1, P2, P3,...) munis de rouleaux à pression (28) et disposés en étages à une distance verticale donnée (p) qui recoivent le flux de tuiles et sont servis par un convoyeur ascendant (TE) ayant des maillons de chaine munies de paires de supports (4) par lesquels chaque tuile (2) est avancé ou convoyé continuellement vers le haut, et une série d'actuateurs (S) fixés à un montant (19);

une paire de chassis (8, 9) fixés respectivement aux extrémités inférieures et supérieures des éléments verticaux du convoyeur ascendant et comprenant des moyens pour la réglage à la largeur du tuile traité (2);

un convoyeur descendant (TD) qui recoit les tuiles (2) provenant des convoyeurs a courroie disposés en étage (P1, P2, P3...) des maillons de chaine dotés de paires de supports distancés l'un de l'autre d'une hauteur majeure par rapport à la pile de tuiles (34) formée sur chaque paire de supports;

un chassis supérieur (9') du convoyeur descendant (TD) identique au chassis supérieur (9) du convoyeur ascendant (TE);

rouleaux à pression (28') placés à l'extrémité des convoyeurs à courroie disposés en étages (P1, P2, P3,...);

une paire de guides verticales d'arret (29) montés respectivement aux montants verticaux à charnière (31) fixés aux éléments verticaux (10') du convoyeur desdcendent (TD) et poussées contre la pile de tuiles;

une station de conditonnement, alimentée avec feuilles de carton (F) et munie d'un applicateur d'adhésif, comprenant une section finale munie de deux paires d'éléments longitudinaux (73) portant les corréspondantes séries de pistons montés latéralement (75) pour compacter les boites complétées, charactérisée par le fait que chaque ensemble de chaque paire de supports (25) qui alimentent la station d'empilage (IM) de la machine est incorporé au moyen d'un pivot au goujon longitudinal respectif qui passe à travers un barreau (43) qui permet la fixation à la chaine du convoyeur descendant (TD) et comprend un support (42) pour un cotè du tuile (2) en descente, et une paire d'oreilles (44) qui s'étendent à partir du pivot à charnière à angle droit par rapport aux supports, lesquelles sont dotées d'un arret à une extrémité, projeté pour venir en contact avec un autre barreau (46) parallèle au barreau à charnière (43) dans le but de maintenir le support (42) in position horizontale, pendant la descente sur la branche plus profonde de la chaine pendant l'opération d'empilage.

2. Une machine, selon la revendication 1, dans laquelle les elements verticaux de support (10') du convoyeur descendant (TD) sont joints au fond avec un demi-chassis (26) qui occupe le coté le plus proche du convoyeur à courroie disposé en étage et est placè immediatement sous le plus bas des étages (P1) et le sus-dit demi-chassis est doté d'une vis-mère en deux sections filetées contraires laquelle permet d'adapter le convoyeur descendant à la largeur du tuile (2) traité.

3. Une machine, selon les revendications 1 et 2, dans laquelle la station de conditionnement (MI) comprend une paire de guides longitudinaux d'alimentation (39) glissant sur une paire de guides relatifs (38), dont la partie supérieure porte des pièces d'écartement (D) constituant la surface de conditionnement (M) et qui sont actuées par un élément transversal (60) actionné par un moteur-réducteur (65), dans laquelle les guides d'alimentation (39) sont munis à l'arrière d'une paire d'éléments verticaux (55) avec une paire de plaques verticales (56), chaque plaque étant attachée au coté exterieur de chaque élément vertical, et avec une paire de plaques horizontales (57), chaque plaque étant attachée à la partie supérieure de chaque élément vertical, les dites paires de plaques permettant de plier respectivement les rabats latéraux postérieurs et le rabat postérieur supérieur du carton (F).

4. Une machine, selon la revendication 1, dans laquelle le chassis principal (7') est muni d'une paire de rouleaux transversaux (53) réglables sur un plan commun horizontal et placés peu au-dessous du plan horizontal occupé par le carton (F) débobiné depuis un rouleau d'alimentation (40) ou alimenté par un magasin (41), dans laquelle ces rouleaux qui donnent support initial au carton, sont placés de façon que la distance qui sépare leurs génératrices internes permet le passage vertical de la pile (34) de tuiles, plus deux fois l'épaisseur du carton; dans laquelle un autre rouleau (54) placé au-dessous et aligné verticalement avec le rouleau (53) plus en avant de la paire, et réglable avec ce dernier est distancé verticalement par rapport à la surface de conditionnement (M) au-dessous, d'une facon telle qu'elle permet le passage longitudinal de la pile (34) de tuiles, plus deux fois au-moins l'épaisseur du carton.

5. Une machine, selon les revendications 1, 2, 3 et 4, dans laquelle les extrémités des éléments longitudinaux (73) de la station de conditionnement (MI) rencontrés les premiers par les piles conditionnées de tuiles qui rapprochent la zone de compactage, sont munies de deux paires de lames flexibles longitudinales (81), fixées au moyen des respectifs supports (82), ayant pour but de plier les rabats antérieurs du carton (F).

6. Une machine, selon les revendications 1, 2, 3, 4 et 5, dans laquelle les extrémités des éléments longitudinaux (73) de la station de conditionnement (MI) rencontrés les premiers par les piles conditionnées (86) de tuiles qui rapprochent la zone de compactage, sont munies de deux paires de plaques profilées (83) fixées aux supports (82) au moyen de fixations à ressort (84) placées transversalement, et qui servent à plier les rabats latérals supérieurs et inférieurs du carton (F).

Fig.1

Fig. 2

Fig.3

EP 0 216 235 B1

Fig. 5

Fig. 4

Fig.7

Fig.9

Fig.6

Fig.8

EP 0 216 235 B1

Fig.10

Fig.11

Fig.12

Fig.13

Fig.14

Fig.15

Fig.16

Fig.17

Fig.18

Fig.19

Fig.20

Fig.21